# EUROPEAN PATENT APPLICATION

(11) **EP 4 787 030 A1**
(43) Date of publication of application: **05.08.2026**
(21) Application number: 25880919.3
(22) Date of filing: 08.05.2025
(51) Int. Cl.: G02B 6/02

(54) **HOLLOW-CORE ANTI-RESONANT FIBER WITH HIGH SINGLE-MODALITY AND ULTRA-LOW LOSS**

(30) Priority: 01.11.2024 CN 202411548332
(71) Applicant: Yangtze Optical Fibre and Cable Joint Stock Limited Company, East Lake High-tech Development Zone Wuhan Hubei 430073 (CN)
(72) Inventor: JIA, Anqing, Wuhan, Hubei 430073 (CN); CHEN, Guoqun, Wuhan, Hubei 430073 (CN); LI, Peng, Wuhan, Hubei 430073 (CN); DING, Yuxin, Wuhan, Hubei 430073 (CN); ZHANG, Lei, Wuhan, Hubei 430073 (CN); LUO, Jie, Wuhan, Hubei 430073 (CN)
(74) Representative: Lorenz Seidler Gossel Part. mbB
(86) International application number: PCT/CN2025/093304
(87) International publication number: WO 2026/091454

(57) **Abstract**

The present invention relates to a hollow-core anti-resonant fiber with highly single-mode performance and ultra-low loss. The hollow-core anti-resonant fiber includes an outer cladding and an inner cladding. The inner cladding is composed of nested structural elements, which are arranged along a circumferential direction of the inner wall of the outer cladding and are connected to the inner wall of the outer cladding, and a central cavity surrounded by the inner cladding forms a core, characterized in that each nested structural element includes three or more layers of nested glass tubes with different radii, wherein at least one inner nested glass tube of at least one layer of inner nested glass tubes deflects to one side relative to an outer nested glass tube adjacent thereto, with a deflection angle of 5 to 55 degrees. Through the structural change of the claddings, the present invention concurrently features a reasonable and fabricable shape of the nested structural elements, an optimized combination of nested dimensions, and deflection of the inner nested glass tubes, thereby significantly increasing the leakage loss of LP11 mode while less affecting the performance of a fundamental mode, finally effectively improving the single-mode performance of the fiber.

## Description

### Field of the Invention

The present invention relates to the technical field of hollow-core fibers, and in particular to a hollow-core anti-resonant fiber with highly single-mode performance and ultra-low loss, which relates to the technical field of optical communication and transmission.

### Background of the Invention

Hollow-core anti-resonant fibers have a unique micro-structured design that can confine light waves within air cores, and have important applications in the fields of light-matter interaction, non-linear optics, gas detection, gas laser generation, optofluidics, etc. Due to the unique structure and light conduction mechanism of hollow-core anti-resonant fibers, the characteristics of ultra-low Rayleigh scattering, low non-linear coefficient and tunable dispersion can be achieved, thereby providing a higher laser-damaged threshold, allowing potential applications in high-power laser transmission, UV/mid-IR light transmission, pulse compression, optical soliton transmission and the like. The ultra-low loss, low dispersion, low non-linearity, and propagation speed close to the speed of light of the air cores can contribute to the development of hollow-core fiber communication transmission and communication devices, thereby laying a foundation for the construction and development of the next generation of ultra-large capacity, low latency, and high-speed optical communication systems.

Even though the hollow-core fibers have unique and great advantages in design and application, due to their inherent lack of higher-order mode cutoff conditions, the hollow-core fibers, unlike solid-core single-mode fibers, cannot achieve the effective filtering of higher-order modes. As a result, their application scenarios in short-distance transmission are greatly limited. Recent research has shown that through a reasonable structural design, the leakage loss of higher-order modes can be increased to a certain extent, thereby producing an approximately single-mode effect after a certain distance.

A commonly used higher-order mode filtering method at present is to select a high-attenuation cladding mode, and through a structural design, make it highly phase-matched with LP11 mode of the core, thereby effectively increasing the leakage loss of LP11 mode. The key factors in the design method lie in: the intrinsic attenuation of the cladding mode and its degree of phase matching with LP11 mode. In general, the higher the attenuation of the cladding mode and the higher its degree of phase matching with LP11 mode, the greater the increase in the leakage of LP11 mode and the better the single-mode performance.

US patent US11733451B2 discloses a single-ring hollow-core anti-resonant fiber. The patent proposes the use of the high phase matching of a high-loss anti-resonant element (ARE) mode and LP11 mode of the cores. The structure is pretty simple, has a low drawing difficulty, and can achieve an ultra-high higher-order mode suppression ratio. When the dimensional proportion of cladding tubes to the cores is about 0.68, a broadband high single-mode effect can be achieved, with the attenuation of LP11 mode reaching the order of 10² dB/m. However, the structure is difficult to achieve ultra-low-attenuation transmission, currently with a minimum attenuation of 4.3 dB/km (at 1080 nm) in a near-infrared band and even higher attenuation in a communication band, and has poor bending resistance, thereby offering no significant advantages for many applications in the near-infrared band.

Chinese patent CN110515152B discloses a nested anti-resonant nodeless fiber (NANF) and a double nested anti-resonant nodeless fiber (DNANF). Such two structures effectively reduce the transmission loss of a fundamental mode by increasing the number of anti-resonant layers. For the NANF, the minimum attenuation has reached 0.22 dB/km, while DNANF has even broken the minimum attenuation record of traditional solid-core fibers, reaching 0.11 dB/km. However, while achieving ultra-low attenuation, the above two fibers also result in a rather low loss of LP11 mode. When the NANF structure achieves the optimal resonant leakage design of LP11 mode, the theoretical attenuation of LP11 reaches the order of about 10²-10³ dB/km. Under actual fabrication and placement conditions, the current maximum reachable is 2.6 dB/m. The intrinsic attenuation of the cladding mode of the NANF structure has been significantly reduced as the number of the structural layers increases, resulting in LP11 mode failing to reach a sufficiently high attenuation level. This situation is more severe in the DNANF structure. Firstly, the attenuation of the cladding mode of the DNANF structure is further reduced. Secondly, there is no longer sufficient space in a cladding region of the DNANF structure to enable sufficient phase matching between LP11 mode and the cladding mode. The theoretical attenuation of LP11 mode has dropped below 10² dB/km, which means that the DNANF cannot effectively filter the higher-order modes, seriously degrading the signal transmission quality.

### Summary of the Invention

The problem to be solved by the present invention is to provide a hollow-core anti-resonant fiber with high single-mode performance and ultra-low loss, in view of the above defects in the prior art. Through the structural change of claddings, the loss of higher-order modes is increased, thereby achieving high-purity single-mode transmission.

The technical solution adopted by the present invention to solve the problem set forth above is as follows. An outer cladding and an inner cladding are included, wherein the inner cladding is composed of nested structural elements that are arranged along a circumferential direction of an inner wall of the outer cladding and are connected to the inner wall of the outer cladding, and a central cavity surrounded by the inner cladding forms a core, characterized in that each nested structural element comprises three or more layers of nested glass tubes with different radii, wherein at least one inner nested glass tube of at least one layer of inner nested glass tubes deflects to one side relative to an outer nested glass tube adjacent thereto, with a deflection angle of 5 to 55 degrees.

According to the above solution, the deflecting inner nested glass tube is included in one or two layers of inner nested glass tubes.

According to the above solution, each nested structural element includes three layers of nested glass tubes with different radii, including, from outside to inside, an outer nested glass tube, a first inner nested glass tube and a second inner nested glass tube. The first inner nested glass tube deflects to one side relative to the outer nested glass tube, or the second inner nested glass tube deflects to one side relative to the first inner nested glass tube.

According to the above solution, each nested structural element includes three layers of nested glass tubes with different radii, including, from outside to inside, an outer nested glass tube, a first inner nested glass tube and a second inner nested glass tube. The first inner nested glass tube deflects to one side relative to the outer nested glass tube, and the second inner nested glass tube deflects to one side relative to the first inner nested glass tube.

According to the above solution, the first inner nested glass tube deflects to one side relative to the outer nested glass tube. That is, a deflection angle is formed between a connecting line L2 between a curvature center O₂ of the first inner nested glass tube and a curvature center O₁ of the outer nested glass tube, and an extending line L1 of a connecting line between the curvature center O₁ of the outer nested glass tube and a geometric center O of the core.

According to the above solution, the second inner nested glass tube deflects to one side relative to the first inner nested glass tube. That is, a deflection angle is formed between a connecting line L3 between a curvature center O₃ of the second inner nested glass tube and a curvature center O₂ of the first inner nested glass tube, and an extending line of a connecting line L2 between the curvature center O₂ of the first inner nested glass tube and a curvature center O₁ of the outer nested glass tube.

According to the above solution, the inner cladding comprises four to six nested structural elements.

According to the above solution, the nested structural elements are evenly distributed at intervals along the circumferential direction of the inner wall of the outer cladding.

According to the above solution, both the outer cladding and the inner wall are circular shaped.

According to the above solution, the nested glass tubes include circular nested glass tubes with different radii. The circular nested glass tubes are tangent to each other, and the outer nested glass tube is tangent to the inner wall of the outer cladding.

According to the above solution, the nested glass tubes include arc-shaped nested glass tubes and circular nested glass tubes with different radii. Each arc-shaped nested glass tube intersects the inner wall of the outer cladding or the adjacent outer nested glass tube, the circular nested glass tubes are tangent to each other, or each circular nested glass tube is tangent to the inner wall of the outer cladding.

According to the above solution, the nested glass tubes include arc-shaped nested glass tubes with different radii. Each arc-shaped nested glass tube intersects the inner wall of the outer cladding.

According to the above solution, all inner nested glass tubes of one layer of inner nested glass tubes deflect to the same side relative to the outer nested glass tube adjacent thereto, with a same or basically same deflection angle.

According to the above solution, all the first inner nested glass tubes deflect to the same side relative to the outer nested glass tube, with a same or basically same deflection angle, and none of the second inner nested glass tubes deflect relative to the first inner nested glass tubes.

According to the above solution, all the first inner nested tubes deflect to the same side relative to the outer nested glass tube, with a same or basically same deflection angle, and all the second inner nested tubes deflect to the opposite side relative to the first inner nested glass tubes, with a same or basically same deflection angle.

According to the above solution, all the inner nested glass tubes of the first inner nested glass tubes deflect to the same side relative to the outer nested glass tube, with a same or basically same deflection angle, and all the inner nested glass tubes of the second inner nested glass tubes deflect to the same side relative to the first inner nested glass tubes, with a same or basically same deflection angle.

According to the above solution, the second inner nested tube is a circular nested glass tube, the first inner nested tube is a circular nested glass tube or an arc-shaped nested glass tube, and the outer nested glass tube is an arc-shaped nested glass tube.

According to the above solution, the second inner nested tube is an arc-shaped nested glass tube, the first inner nested tube is an arc-shaped nested glass tube or a circular nested glass tube, and the outer nested glass tube is an arc-shaped nested glass tube.

According to the above solution, the deflection angle is 15 to 55 degrees; further, the deflection angle is 25 to 50 degrees; and further, the deflection angle is 35 to 45 degrees.

According to the above solution, substrate materials of both the outer cladding and the nested structural elements are pure silica glass.

According to the above solution, the inner and outer nested glass tubes have a wall thickness of 0.3 to 1.5 µm.

According to the above solution, the ratio of outer diameters of the outer nested glass tube to the first inner nested glass tube is 1: 0.5to 1: 0.65, and a ratio of outer diameters of the first inner nested glass tube to the second inner nested glass tube is 1: 0.3to1: 0.5.

According to the above solution, the region of the core and other inner cavity regions of the outer cladding are filled with a gas.

According to the above solution, the gas is argon, nitrogen, helium, air, or a mixture of multiple gases.

According to the above solution, the fundamental mode loss of the fiber is 0.05 to 0.5dB/km; and further, the fundamental mode loss of the fiber is less than 0.15 dB/km.

According to the above solution, the higher-order mode loss of the fiber is 3 to 20dB/m; and further, the higher-order mode loss of the fiber is greater than 8dB/m.

The present invention has the following beneficial effects. 1. In the structure of the present invention, the inner cladding contains multiple layers of anti-resonant silica walls and air layers, a transmitted fundamental mode is effectively confined within the core, thereby reducing the confinement loss. Through the structural change of the claddings, the present invention concurrently features a reasonable and fabricable shape of the nested structural elements, an optimized combination of nested dimensions, and deflection of the inner nested glass tubes, thereby significantly increasing the leakage loss of LP11 mode while less affecting the performance of the fundamental mode, finally effectively improving the single-mode performance of the fiber. The key to the present invention is that, when the ratio of the outer diameters of the outer nested glass tube to the inner nested glass tube is optimized to an optimal value, the inner nested glass tube deflects to one side within the outer nested glass tube. The configuration can improve the leakage efficiency of LP11 mode, thereby achieving higher single-mode performance. 2. The present invention is designed to enable the phase matching between the higher-order modes of the core and the mode of the inner air regions, and to increase the loss of a cladding mode, enabling more efficient leakage of the higher-order modes and further enhancing the attenuation of higher-order modes, resulting in excellent single-mode transmission performance. 3. The single-mode performance of the present invention is non-wavelength-selective, enabling highly single-mode transmission across the operating wavelength range. The present invention provides a hollow-core fiber with both attenuation and single-mode performance, offering a transmission medium with good performance for fields, such as high-speed communication, high-power transmission, gas laser devices and gas detection.

### Brief Description of the Drawings

Fig. 1 is a structural diagram of a radial section in a first embodiment of the present invention.
Fig. 2 is a partially enlarged view of a nested tube in Fig. 1.
Fig. 3 is a curve graph of loss of a fundamental mode and LP11 mode versus rotation angles in the first embodiment of the present invention.
Fig. 4 is a curve graph of the loss of the fundamental mode and LP11 mode versus wavelengths in the first embodiment of the present invention.
Fig. 5 is a structural diagram of a radial section in a second embodiment of the present invention.
Fig. 6 is a structural diagram of a radial section in a third embodiment of the present invention.
Fig. 7 is a structural diagram of a radial section in a fourth embodiment of the present invention.
Fig. 8 is a structural diagram of a radial section in a fifth embodiment of the present invention.
Fig. 9 is a curve graph of the loss of the fundamental mode and LP11 mode versus the wavelengths in the fifth embodiment of the present invention.

### Detailed Description of the Embodiments

The following will describe the present invention in further detail with reference to the embodiments and the accompanying drawings.

A higher-order mode filtering method commonly used in hollow-core fibers at present is to select a high-attenuation cladding mode, and through a structural design, make it highly phase-matched with the core LP11 mode, thereby effectively increasing the leakage loss of the core LP11 mode. Generally, the attenuation of the designed LP11 mode depends on the intrinsic attenuation of the cladding mode and its degree of phase matching with LP11 mode. In general, the higher the attenuation of the cladding mode and the higher its degree of phase matching with LP11 mode, the greater the increase in the leakage of LP11 mode and the better the single-mode performance.

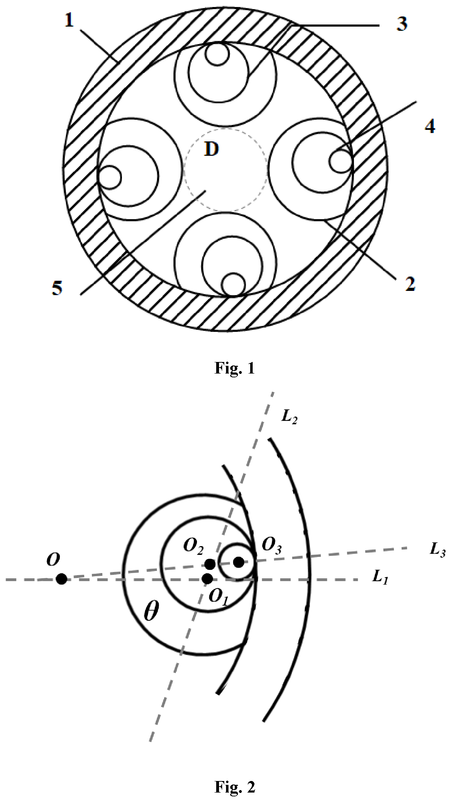

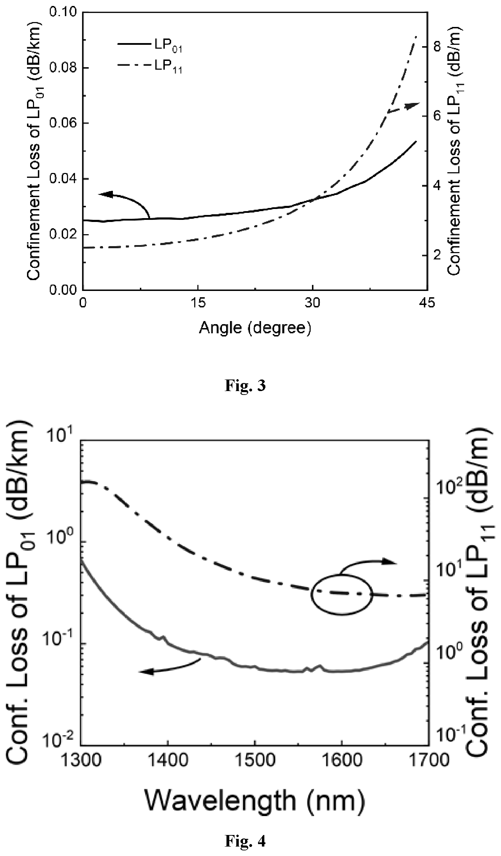

A first embodiment of the present invention, as shown in Fig.1 and Fig. 2, includes an outer cladding 1 and an inner cladding. The inner cladding is composed of four nested structural elements that are distributed at intervals along a circumferential direction of an inner wall of the outer cladding. Each nested structural element includes three layers of nested glass tubes with different radii, including, from outside to inside, an outer nested glass tube 2, a first inner nested glass tube 3 and a second inner nested glass tube 4, which form an anti-resonant element. The nested glass tubes include one arc-shaped nested glass tube and two circular nested glass tubes with different radii. The outer nested glass tube is the arc-shaped nested glass tube, with a diameter of d1, and the first inner nested glass tube and the second inner nested glass tube are the circular nested glass tubes, with diameters of d2 and d3, respectively. The outer nested glass tube intersects the inner wall of the outer cladding. The first inner nested glass tube is tangent to the inner wall of the outer cladding and deflects to one side. That is, a deflection angle of θ₁ is formed between a connecting line L2 between a curvature center (i.e., a circle center) of the first inner nested glass tube and a curvature center (i.e., a circle center) of the outer nested glass tube, and an extending line L1 between a connecting line of the curvature center of the outer nested glass tube and a geometric center of the core. The second inner nested glass tube is tangent to the first inner nested glass tube at a point where the first inner nested glass tube is tangent to the inner wall of the outer cladding. An opposite deflection angle of θ₂ is formed between a connecting line L3 between the curvature center (i.e., the circle center) of the first inner nested glass tube and a curvature center (i.e., a circle center) of the second inner nested glass tube, and the connecting line L2. The deflecting directions of all the inner nested glass tubes are identical. A central cavity surrounded by the inner cladding forms a core 5. A region of the core and other inner space are filled with a gas. The gas is argon, nitrogen, helium, air, or a mixture of multiple gases. Specifically, the relevant parameters of this embodiment are as follows. The diameter D of the core is 29 µm, the outer diameter d1 of the outer nested glass tube is 44 µm, and the round angle of the arc is 245°; the outer diameter d2 of the first inner nested glass tube is 24 µm, with a ratio of 0.55 to the outer diameter of the outer nested glass tube; the outer diameter d3 of the second inner nested glass tube is 10 µm, with a ratio of 0.41 to the outer diameter of the first inner nested glass tube; and the inner diameter of the outer cladding (the diameter of a cavity of the outer cladding) is 105 µm. In this embodiment, each nested glass tube has a wall thickness of 1.1 µm. When each nested glass tube has a wall thickness of about 0.95 µm, a second resonant operating band is extended to 1310 nm. When a first anti-resonant window is used as a communication operating band, each nested glass tube has a wall thickness of about 0.5 µm. Fig. 3 shows the optimization process of the rotation angle θ₁ in this embodiment. Specifically, when θ₁ is 0°, none of the structures deflect, and in this case, loss of LP01 and LP11 modes are 0.025 dB/km and 2200 dB/km (2.2 dB/m), respectively; when θ₁ is 15°, the loss of the LP01 and LP11 modes are 0.026 dB/km and 2500 dB/km (2.5 dB/m), respectively; when θ₁ is 30°, the loss of the LP01 and LP11 modes are 0.032 dB/km and 3500 dB/km (3.5 dB/m), respectively; when θ₁ is 35°, the loss of the LP01 and LP11 modes are 0.037 dB/km and 4500 dB/km (4.5 dB/m), respectively; when θ₁ is 40°, the loss of the LP01 and LP11 modes are 0.045 dB/km and 6300 dB/km (6.3 dB/m), respectively; when θ₁ is 44°, the loss of the LP01 and LP11 modes are 0.053 dB/km and 8300 dB/km (8.3 dB/m), respectively. Increasing of the rotation angle θ₁ significantly improves the single-mode performance of the fiber, while only slightly increasing the loss of a fundamental mode.

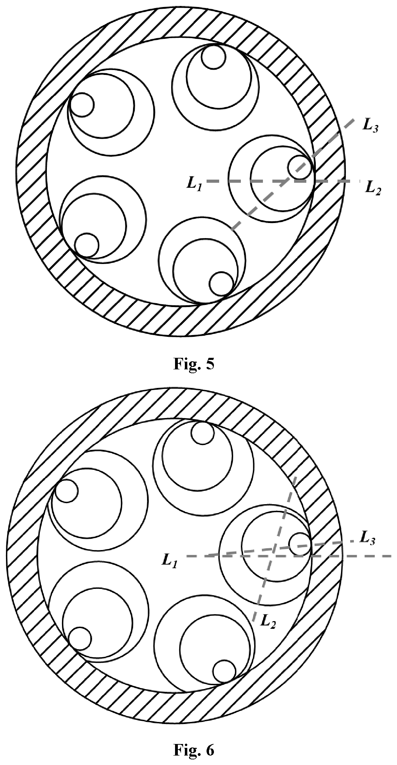

The present invention concurrently features a reasonable and fabricable shape of the nested structural elements, an optimized combination of nested dimensions, and deflection of the inner nested glass tubes, which comprehensively achieve the following technical effects: significantly increasing the leakage loss of LP11 mode while less affecting the performance of the fundamental mode, finally effectively improving the single-mode performance of the fiber. Fig. 4 shows an optimized attenuation spectrum curve of this embodiment. In this time, the deflection angle between L1 and L2 is 44°, and the reverse deflection angle between L2 and L3 is 40°. Within a broadband range, it exhibits a design effect of ultra-low attenuation and ultra-high single-mode performance. A second embodiment of the present invention, as shown in Fig. 5, differs from the first embodiment in that the inner cladding is composed of five nested structural elements. The outer nested glass tube is a circular nested glass tube. The outer nested glass tube is tangent to the inner wall of the outer cladding. The first inner nested glass tube is tangent to the outer nested glass tube and does not deflect relative to the outer nested glass tube. That is, the connecting line L2 between the curvature center (i.e., the circle center) of the first inner nested glass tube and the curvature center (i.e., the circle center) of the outer nested glass tube coincides with the extending line L1 of the connecting line between the curvature center of the outer nested glass tube and the geometric center of the core. The second inner nested glass tube is tangent to the first inner nested glass tube. The second inner nested glass tube deflects to one side relative to the tangent point of the first inner nested glass tube to the inner wall of the outer cladding. That is, there is a deflection angle of 30° between L3 and L2 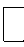 where L3 refers to the connecting line between the curvature center (i.e., the circle center) of the second inner nested glass tube and the curvature center (i.e., the circle center) of the first inner nested glass tube, as well as L2 refers to the extending line of the connecting line between the curvature center of the first inner nested glass tube and the curvature center of the outer nested glass tube. The deflecting directions of all the inner nested glass tubes are identical.

A third embodiment of the present invention, as shown in Fig. 6, differs from the second embodiment in that the outer nested glass tube is an arc-shaped nested glass tube, the round angle of the arc is about 320°, and the outer nested glass tube intersects the inner wall of the outer cladding. The first inner nested glass tube is tangent to the inner wall of the outer cladding and deflects to one side. That is, a deflection angle of 35° is formed between the connecting line L2 between the curvature center (i.e., the circle center) of the first inner nested glass tube and the curvature center (i.e., the circle center) of the outer nested glass tube, and the extending line L1 of the connecting line between the curvature center of the outer nested glass tube and the geometric center of the fiber. The second inner nested glass tube is tangent to the first inner nested glass tube at a point where the first inner nested glass tube is tangent to the inner wall of the outer cladding. An opposite deflection angle of 30° is formed between the connecting line L3 between the curvature center (i.e., the circle center) of the first inner nested glass tube and the curvature center (i.e., the circle center) of the second inner nested glass tube, and L2.

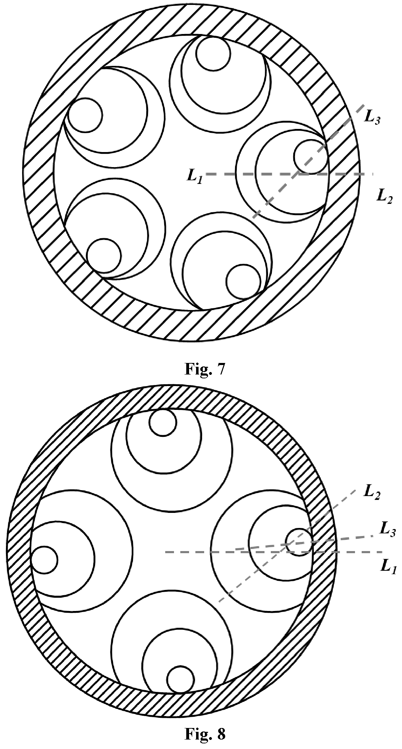

A fourth embodiment of the present invention, as shown in Fig. 7, differs from the second embodiment in that the second inner nested glass tube is a circular nested glass tube, the first inner nested glass tube is an arc-shaped nested glass tube, and the outer nested glass tube is an arc-shaped nested glass tube. Both the outer nested glass tube and the first inner nested glass tube intersect the inner wall of the outer cladding. The first inner nested glass tube does not deflect relative to the outer nested glass tube, with a deflection angle of 0. The second inner nested glass tube deflects to one side relative to the first inner nested glass tube. That is, a deflection angle of 35° is formed between the connecting line L3 between a curvature center of the second inner nested glass tube and the curvature center of the first inner nested glass tube, and the extending line of the connecting line L2 between the curvature center of the first inner nested glass tube and the curvature center of the outer nested glass tube.

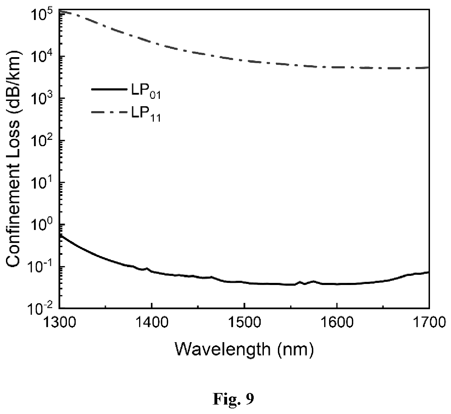

A fifth embodiment of the present invention, as shown in Fig. 8, differs from the first embodiment in that the outer nested glass tube and the first inner nested glass tube are arc-shaped nested glass tubes. The second inner nested glass tube is a circular nested glass tube. The outer nested glass tube and the first inner nested glass tube intersect the inner wall of the outer cladding. The second inner nested glass tube is tangent to the inner wall of the outer cladding. All the first inner nested glass tubes deflect to the same side relative to the outer nested glass tubes, with a same or basically same deflection angle. That is, a deflection angle of 28° is formed between the connecting line L2 between the curvature center (i.e., the circle center) of the first inner nested glass tube and the curvature center (i.e., the circle center) of the outer nested glass tube, and the extending line L1 of the connecting line between the curvature center of the outer nested glass tube and the geometric center of the fiber. All the second inner nested glass tubes deflect to the opposite side relative to the first inner nested glass tubes, with a same or basically same deflection angle. That is, an opposite deflection angle of 24° is formed between the connecting line L3 between the curvature center of the second inner nested glass tube and the curvature center of the first inner nested glass tube, and the extending line of the connecting line L2 between the curvature center of the first inner nested glass tube and the curvature center of the outer nested glass tube. Specifically, the relevant parameters of this embodiment are as follows. The diameter D of the core is 29 µm, the outer diameter d1 of the outer nested glass tube is 44 µm, and the round angle of the arc is 245°; the outer diameter d2 of the first inner nested glass tube is 28 µm, with a ratio of 0.64 to the outer diameter of the outer nested glass tube; the outer diameter d3 of the second inner nested glass tube is 10 µm, with a ratio of 0.36 to the outer diameter of the first inner nested glass tube; and the inner diameter of the outer cladding (the diameter of the cavity of the outer cladding) is 105 µm. In this embodiment, each nested glass tube has a wall thickness of 1.1 µm. Fig. 9 shows an optimized attenuation spectrum curve of this embodiment, which enables a broadband range in which the attenuation of LP11 mode reaches nearly 10000 dB/km (10 dB/m), while the transmission loss of the fundamental mode is less than 0.1 dB/km.

## Claims

1. A hollow-core anti-resonant fiber with high single-mode performance and ultra-low loss, comprising an outer cladding and an inner cladding, wherein the inner cladding is composed of nested structural elements that are arranged along a circumferential direction of an inner wall of the outer cladding and are connected to the inner wall of the outer cladding, and a central cavity surrounded by the inner cladding forms a core, **characterized in that** each nested structural element comprises three or more layers of nested glass tubes with different radii, wherein at least one inner nested glass tube of at least one layer of inner nested glass tubes deflects to one side relative to an outer nested glass tube adjacent thereto, with a deflection angle of 5 to 55 degrees.

2. The hollow-core anti-resonant fiber with high single-mode performance and ultra-low loss according to claim 1, **characterized in that** the deflecting inner nested glass tube is comprised in one or two layers of inner nested glass tubes.

3. The hollow-core anti-resonant fiber with high single-mode performance and ultra-low loss according to claim 2, **characterized in that** each nested structural element comprises three layers of nested glass tubes with different radii, comprising, from outside to inside, an outer nested glass tube, a first inner nested glass tube and a second inner nested glass tube, wherein the first inner nested glass tube deflects to one side relative to the outer nested glass tube, or the second inner nested glass tube deflects to one side relative to the first inner nested glass tube.

4. The hollow-core anti-resonant fiber with high single-mode performance and ultra-low loss according to claim 2, **characterized in that** each nested structural element comprises three layers of nested glass tubes with different radii, comprising, from outside to inside, an outer nested glass tube, a first inner nested glass tube and a second inner nested glass tube, wherein the first inner nested glass tube deflects to one side relative to the outer nested glass tube, and the second inner nested glass tube deflects to one side relative to the first inner nested glass tube.

5. The hollow-core anti-resonant fiber with high single-mode performance and ultra-low loss according to claim 3 or 4, **characterized in that** the first inner nested glass tube deflects to one side relative to the outer nested glass tube, that is, a deflection angle is formed between a connecting line L2 between a curvature center O₂of the first inner nested glass tube and a curvature center O₁ of the outer nested glass tube, and an extending line L1 of a connecting line between the curvature center O₁ of the outer nested glass tube and a geometric center O of the core.

6. The hollow-core anti-resonant fiber with high single-mode performance and ultra-low loss according to claim 3 or 4, **characterized in that** the second inner nested glass tube deflects to one side relative to the first inner nested glass tube, that is, a deflection angle is formed between a connecting line L3 between a curvature center O₃ of the second inner nested glass tube and a curvature center O₂ of the first inner nested glass tube, and an extending line of a connecting line L2 between the curvature center O₂ of the first inner nested glass tube and a curvature center O₁ of the outer nested glass tube.

7. The hollow-core anti-resonant fiber with high single-mode performance and ultra-low loss according to claim 1 or 2, **characterized in that** the inner cladding comprises four to six nested structural elements.

8. The hollow-core anti-resonant fiber with high single-mode performance and ultra-low loss according to claim 1 or 2, **characterized in that** the nested structural elements are evenly distributed at intervals along the circumferential direction of the inner wall of the outer cladding.

9. The hollow-core anti-resonant fiber with high single-mode performance and ultra-low losses according to claim 1 or 2, **characterized in that** both the outer cladding and the inner wall are circular.

10. The hollow-core anti-resonant fiber with high single-mode performance and ultra-low loss according to claim 3 or 4, **characterized in that** the nested glass tubes comprise circular nested glass tubes with different radii, wherein the circular nested glass tubes are tangent to each other, and the outer nested glass tube is tangent to the inner wall of the outer cladding.

11. The hollow-core anti-resonant fiber with high single-mode performance and ultra-low loss according to claim 3 or 4, **characterized in that** the nested glass tubes comprise arc-shaped nested glass tubes and circular nested glass tubes with different radii, wherein each arc-shaped nested glass tube intersects the inner wall of the outer cladding or the adjacent outer nested glass tube, the circular nested glass tubes are tangent to each other, or each circular nested glass tube is tangent to the inner wall of the outer cladding.

12. The hollow-core anti-resonant fiber with high single-mode performance and ultra-low loss according to claim 3 or 4, **characterized in that** the nested glass tubes comprise arc-shaped nested glass tubes with different radii, wherein each arc-shaped nested glass tube intersects the inner wall of the outer cladding.

13. The hollow-core anti-resonant fiber with high single-mode performance and ultra-low loss according to claim 1 or 2, **characterized in that** all inner nested glass tubes of one layer of inner nested glass tubes deflect to a same side relative to the outer nested glass tube adjacent thereto, with a same or basically same deflection angle.

14. The hollow-core anti-resonant fiber with high single-mode performance and ultra-low loss according to claim 3, **characterized in that** all the first inner nested glass tubes deflect to a same side relative to the outer nested glass tube, with a same or basically same deflection angle, and none of the second inner nested glass tubes deflect relative to the first inner nested glass tubes.

15. The hollow-core anti-resonant fiber with high single-mode performance and ultra-low loss according to claim 4, **characterized in that** all the first inner nested glass tubes deflect to a same side relative to the outer nested glass tube, with a same or basically same deflection angle, and all the second inner nested glass tubes deflect to an opposite side relative to the first inner nested glass tubes, with a same or basically same deflection angle.

16. The hollow-core anti-resonant fiber with high single-mode performance and ultra-low loss according to claim 4, **characterized in that** all the first inner nested glass tubes deflect to a same side relative to the outer nested glass tube, with a same or basically same deflection angle, and all the second inner nested glass tubes deflect to a same side relative to the first inner nested glass tubes, with a same or basically same deflection angle.

17. The hollow-core anti-resonant fiber with high single-mode performance and ultra-low loss according to claim 3 or 4, **characterized in that** the second inner nested glass tube is a circular nested glass tube, the first inner nested glass tube is a circular nested glass tube or an arc-shaped nested glass tube, and the outer nested glass tube is an arc-shaped nested glass tube.

18. The hollow-core anti-resonant fiber with high single-mode performance and ultra-low loss according to claim 3 or 4, **characterized in that** the second inner nested glass tube is an arc-shaped nested glass tube, the first inner nested glass tube is an arc-shaped nested glass tube or a circular nested glass tube, and the outer nested glass tube is an arc-shaped nested glass tube.

19. The hollow-core anti-resonant fiber with high single-mode performance and ultra-low loss according to claim 1 or 2, **characterized in that** the deflection angle is 15 to 55 degrees.

20. The hollow-core anti-resonant fiber with high single-mode performance and ultra-low loss according to claim 1 or 2, **characterized in that** the deflection angle is 25 to 50 degrees.

21. The hollow-core anti-resonant fiber with high single-mode performance and ultra-low loss according to claim 1 or 2, **characterized in that** the deflection angle is 35 to 45 degrees.

22. The hollow-core anti-resonant fiber with high single-mode performance and ultra-low loss according to claim 1 or 2, **characterized in that** substrate materials of both the outer cladding and the nested structural elements are pure quartz glass.

23. The hollow-core anti-resonant fiber with high single-mode performance and ultra-low loss according to claim 1 or 2, **characterized in that** the inner and outer nested glass tubes have a wall thickness of 0.3 to 1.5 µm.

24. The hollow-core anti-resonant fiber with high single-mode performance and ultra-low loss according to claim 3 or 4, **characterized in that** a ratio of outer diameters of the outer nested glass tube to the first inner nested glass tube is 1: 0.5to 1: 0.65, and a ratio of outer diameters of the first inner nested glass tube to the second inner nested glass tube is 1: 0.3 to 1: 0.5.

25. The hollow-core anti-resonant fiber with high single-mode performance and ultra-low loss according to claim 1 or 2, **characterized in that** a region of the core and other inner cavity regions of the outer cladding are filled with a gas.

26. The hollow-core anti-resonant fiber with high single-mode performance and ultra-low lossesloss according to claim 25, **characterized in that** the gas is argon, nitrogen, helium, air, or a mixture of multiple gases.

27. The hollow-core anti-resonant fiber with high single-mode performance and ultra-low loss according to claim 1 or 2, **characterized in that** a fundamental mode loss of the fiber is 0.05 to 0.5 dB/km.

28. The hollow-core anti-resonant fiber with high single-mode performance and ultra-low loss according to claim 1 or 2, **characterized in that** a fundamental mode loss of the fiber is less than 0.15 dB/km.

29. The hollow-core anti-resonant fiber with high single-mode performance and ultra-low loss according to claim 1 or 2, **characterized in that** a higher-order mode loss of the fiber is 3 to 20 dB/m.

30. The hollow-core anti-resonant fiber with high single-mode performance and ultra-low loss according to claim 1 or 2, **characterized in that** a higher-order mode loss of the fiber is greater than 8 dB/m.
